# DEMANDE DE BREVET EUROPEEN

(11) **EP 3 778 524 A1**
(43) Date de publication de la demande: **17.02.2021**
(21) Numéro de dépôt: 20194150.7
(22) Date de dépôt: 11.01.2011
(51) Int. Cl.: C04B 28/02, C04B 28/04, C04B 28/06, C04B 28/10, C04B 28/14

(54) **ENDUIT ISOLANT A BASE DE XEROGEL DE SILICE**

(30) Priorité: 11.01.2010 FR 1000092
(62) Demande divisionnaire de: 11700092.7
(71) Demandeur: SIKA TECHNOLOGY AG, 6340 Baar (CH); Association pour la Recherche et le Développement des Méthodes et Processus Industriels, 75006 Paris (FR)
(72) Inventeur: Achard, Patrick, 06904 Sophia Antipolis Cedex (FR); Rigacci, Arnaud, 06904 Sophia Antipolis Cedex (FR); Echantillac, Thomas, 38291 Saint Quentin Fallavier (FR); Bellet, Audrey, 38291 Saint Quentin Fallavier (FR); Marie, Aulagnier, 38070 Saint Quentin Fallavier (FR); Daubresse, Anne, 38070 Saint Quentin Fallavier (FR)
(74) Mandataire: Sika Patent Attorneys

(57) **Abrégé**

L'invention concerne un enduit applicable sur une surface de bâtiment pour réaliser un revêtement isolant thermiquement, cet enduit comprenant de l'eau, du liant (a) hydraulique minéral et/ou organique, éventuellement une charge structurante (c) et éventuellement des adjuvants (d), caractérisé en ce qu'il comporte en outre une charge isolante (b) comprenant une poudre ou un granulat d'au moins un xérogel de silice hydrophobe obtenu en traitant un organogel de silice avec un agent hydrophobant en présence d'acide et dans un solvant ; en séparant l'organogel hydrophobe obtenu ; et en éliminant le solvant de l'organogel par évaporation.

La préparation d'un tel enduit d'application par projection sur une surface de bâtiment et le revêtement ainsi obtenu, constituent d'autres objets de la présente invention.

## Description

### Domaine technique

Le domaine technique de l'invention est celui des enduits et mortiers extérieurs pour le bâtiment.

Plus précisément, la présente invention concerne des enduits extérieurs à base de xérogel de silice.

La préparation d'un tel enduit d'application par projection sur une surface de bâtiment et le revêtement ainsi obtenu, constituent d'autres objets de la présente invention.

Dans tout le présent exposé, tout singulier désigne indifféremment un singulier ou un pluriel.

### Art Antérieur - Problème technique

La consommation énergétique du secteur du bâtiment représente près de la moitié (46%) de la consommation énergétique en France, comme en Europe (42%). Eu égard à la conjoncture énergétique actuelle, l'ensemble des acteurs de ce secteur ont comme souci majeur de trouver des moyens pour réduire cette facture. Pour ce faire, deux leviers sont privilégiés : le rendement des systèmes de chauffage et la réduction des pertes de chaleur.

S'agissant du deuxième levier qui s'inscrit dans le cadre du présent exposé, il convient de noter que l'isolation d'un bâtiment peut se faire selon les trois principaux schémas suivants :
- système d'isolation par l'intérieur (ITI),
- système d'isolation par l'extérieur (ITE), et
- système d'isolation répartie (ITR).

Les enduits isolants selon l'invention relèvent des systèmes d'isolation ITE.

Classiquement, les enduits de façade possèdent deux principales fonctions. La première est de protéger/imperméabiliser et la deuxième de décorer l'extérieur du bâtiment.

Ces enduits extérieurs ou enduits de façade sont préparés à partir d'une composition sèche que l'on mélange avec de l'eau (gâchage) de manière à obtenir une pâte de viscosité adaptée à l'application, par exemple par projection, sur une surface extérieure de bâtiments.

La composition sèche d'un enduit extérieur comprend classiquement :
◆ un liant qui peut comprendre au moins un liant hydraulique minéral (ciment Portland ou chaux hydraulique) et/ou au moins un liant organique,
◆ une charge structurante (filler -granulométrie inférieure ou égale à 200 µmou sable calcaire, siliceux ou siliceux calcaire; charge légère type perlite ou vermiculite),
◆ et des adjuvants (rétenteurs d'eau, entraîneurs d'air, agents hydrofuges, accélérateurs de prise, retardateurs de prise, etc.).

La granulométrie du mortier permet de régler la compacité finale de l'enduit, ainsi que la viscosité ou la rhéologie de la pâte lors du gâchage. Elle détermine également l'aspect fini de l'enduit.

Dans le présent exposé, on désigne indifféremment par *"enduit"* ou *"mortier",* le mélange obtenu après gâchage avec de l'eau d'une composition sèche du type de celle visée ci-dessus.

Pour rendre un enduit extérieur isolant thermiquement, il convient de diminuer sa conductivité thermique.

Il est connu d'utiliser des charges minérales, et parfois organiques, pour diminuer la conductivité thermique des enduits extérieurs ou des bétons. Les charges minérales utilisées à cette fin sont par exemple la perlite, la pierre ponce, la diatomite, les silicates, la vermiculite, des pouzzolanes... Les charges organiques peuvent être des charges en polystyrène extrudé ou expansé.

Les problèmes rencontrés avec ces charges à vocation isolante concernent notamment leur ségrégation au sein de la pâte lors du gâchage, l'application délicate de ces pâtes en raison des caractéristiques mécaniques desdites charges, et enfin, les répercussions négatives sur les propriétés mécaniques du revêtement appliqué sur la surface extérieure du bâtiment. De plus, les charges ont l'inconvénient d'être difficilement manipulables en grandes quantités. Enfin, les conductivités thermiques atteintes pour le revêtement à base des charges isolantes connues, sont perfectibles sachant que l'objectif visé en termes de conductivité thermique λ (W.m⁻¹.K⁻¹) est : λ ≤ 0,08 et préférentiellement ≤ 0,065.

Il s'ensuit que pour l'instant, les enduits extérieurs projetables connus vont difficilement au-delà des deux fonctions essentielles que l'on attend d'eux, à savoir d'une part, la protection/imperméabilisation du bâtiment et, d'autre part, sa décoration. Des progrès restent à faire en matière d'isolation thermique, s'agissant de ces enduits.

Par ailleurs, le brevet FR-2873677-B1 divulgue un xérogel de silice peu dense et hydrophobe obtenu en traitant un organogel de silice avec un agent hydrophobant en présence d'acide et dans un solvant approprié, en séparant l'organogel hydrophobe obtenu et en éliminant le solvant de l'organogel par évaporation. Le terme *"xérogel"* désigne généralement un gel de silice qui a été séché par évaporation du solvant.

Il est à noter que les aérogels de silice se distinguent des xérogels de silice par le fait que les premiers sont des gels de silice séchés dans des conditions super-critiques, ils peuvent alors être monolithiques, tandis que les seconds sont des gels de silice séchés par évaporation de solvants, ils sont en général obtenus sous forme divisée granulaire.

Les produits de départ, à savoir les organogels de silice et leur procédé d'obtention, font partie de l'art antérieur. Ils sont produits par exemple par hydrolyse contrôlée de composés organosiliciques en solvants organiques (cf. C.J. Brinker et G.W. Scherrer, « Sol-gel Science: the physics and chemistry of Sol-gel processing », Academics, 1990). De tels xérogels qualifiés de matériaux super isolants à très faible conductivité thermique, sont utilisés pour réaliser, par exemple, des vitrages isolants. Leurs domaines d'application sont notamment le bâtiment, le transport et l'aérospatiale.

Une application connue des xérogels super isolants est celle d'isolant pour conduits à double enveloppe de puits d'extraction de fluides pétroliers par exemple pour réhabiliter des puits de forage dans le domaine de l'exploitation pétrolière. Dans cette application, on cherche à éviter le bouchage des conduits par la formation d'hydrates de gaz ou de paraffines en évitant le refroidissement des produits extraits lors de leur remontée (cf. projet français Thermogelf, par exemple).

La demande de brevet WO-99/36725-A1 enseigne l'utilisation d'aérogels de silice dans des composites isolants multi-couches utilisables comme dans des applications cryogéniques, par exemple pour l'isolation de réservoirs, de conduits, de conteneurs, etc. La demande de brevet européen EP-0884376-A concerne l'utilisation d'aérogels de silice comme matériaux de charge pour le transport et le stockage de fluides inflammables et/ou toxiques tel que l'acétylène.

Le brevet US-6,156,223-B concerne des xérogels et leur préparation, et mentionne comme application de xérogels, outre l'isolation, leur utilisation en tant que matrice pour source lumineuse radio-luminescente, ou bien encore en acoustique, en catalyse, en filtration, en physique de haute énergie, en énergie solaire et en conservation.

Dans ce contexte, le problème technique à la source de la présente invention est de satisfaire à au moins l'un des objectifs énoncés ci-après :
- fournir un enduit projetable pour revêtements extérieurs de bâtiments qui présente des propriétés d'isolation thermique améliorées, ou en d'autres termes d'ajouter une nouvelle fonction d'isolation à l'enduit sans préjudice pour sa fonction classique de protection/imperméabilisation, voire éventuellement pour sa fonction de décoration (2),
- fournir un enduit projetable pour revêtements extérieurs de bâtiments, simple à mettre en œuvre,
- fournir un enduit projetable pour revêtements extérieurs de bâtiments qui présente, une fois appliqué comme revêtement, une conductivité thermique réduite,
- fournir un enduit projetable répondant à au moins l'un des critères suivants :
   ∘ stabilité au stockage sous forme sèche et stabilité après gâchage,
   ∘ rétention d'eau acceptable lors du gâchage,
   ∘ consistance et viscosité de pâte permettant le pompage par une machine à projeter,
   ∘ aptitude au pompage,
   ∘ temps ouvert suffisamment long pour réaliser le gâchage et l'application d'enduits ;
- fournir un enduit projetable pour revêtements extérieurs de bâtiments qui soit facile à gâcher par les utilisateurs,
- fournir une composition sèche pour la préparation de l'enduit tel que visé ci-dessus,
- fournir un procédé de préparation de l'enduit tel que visé ci-dessus qui soit facile à mettre en œuvre et économique,
- fournir un revêtement extérieur de bâtiments par application de l'enduit susvisé, ledit revêtement ayant une conductivité thermique λ ≤ à 0,065 W.m⁻¹.K⁻¹ et/ou ayant une rétention d'eau supérieure à 80% et un temps de prise entre 5 et 20 heures,
- fournir un revêtement extérieur de bâtiments par application de l'enduit susvisé, ledit revêtement ayant de bonnes performances mécaniques (dureté, résistance à la fissuration, durabilité) et de mise en œuvre,
- fournir un revêtement extérieur mince de bâtiments assurant la décoration, par application de l'enduit susvisé ou par une couche mince de finition compatible avec l' enduit.

### Brève description de l'invention

Le problème mentionné ci-dessus est résolu par l'invention qui concerne un enduit applicable sur une surface de bâtiment pour réaliser un revêtement isolant thermiquement, cet enduit comprenant de l'eau, du liant (a), éventuellement une charge structurante (c) et éventuellement des adjuvants (d), caractérisée en ce qu'il comporte en outre une charge isolante (b) comprenant une poudre ou un granulat d'au moins un aérogel de silice et/ou d'un xérogel de silice hydrophobe (de préférence *"peu dense"*)*.*

Il est du mérite des inventeurs d'être parvenus à formuler cet enduit nonobstant le fait que la poudre ou les granulats d'aérogel de silice et/ou de xérogel de silice hydrophobes mis en œuvre sont de faible densité et sont par conséquent très difficiles à incorporer dans des matrices cimentaires.

L'enduit selon l'invention permet de réaliser un revêtement isolant doté d'un coefficient de conductivité thermique λ faible, et ce, sans affecter les fonctions requises pour de tels produits, à savoir notamment :
- la protection/imperméabilisation du support, par exemple des façades,
- éventuellement la décoration, cette fonction de décoration étant assurée par une couche mince de finition compatible avec l'enduit ou par l'enduit lui-même si ces propriétés mécaniques et son aspect visuel le permettent,
- la préparation,
- l'application,
- la durabilité, et
- la résistance mécanique.

En particulier, l'enduit selon l'invention est doté de bonnes performances de mise en œuvre telles que "l'ouvrabilité" et des propriétés rhéologiques adaptées au pompage. *"L'ouvrabilité"* est la capacité d'un mortier à présenter un temps ouvert, c'est-à-dire un temps après gâchage durant lequel le produit est maniable. Un temps ouvert trop court correspond à une prise rapide du liant et un temps ouvert trop long peut favoriser l'apparition de certaines dégradations de l'enduit.
En outre, cet enduit présente notamment sur le plan mécanique une dureté idoine et une bonne résistance à la fissuration, durabilité.

La présente invention vise aussi un procédé de préparation de l'enduit défini précédemment, consistant essentiellement à mélanger de l'eau à un mélange prêt à l'emploi comprenant le liant (a), éventuellement tout ou partie de la charge isolante (b), la charge structurante (c), les adjuvants (di) à (dᵥᵢ), le temps de mélange étant de préférence égal à 1 à 30 min, voire 3 à 10 min, la totalité ou le reste de la charge isolante (b) étant ensuite incorporée progressivement dans le mélange si cela n'a pas été fait auparavant.

### Définitions

Les définitions données ci-après à titre d'exemples, peuvent servir de référence dans le cadre du présent exposé :
- *"peu dense", "faible densité"* pour qualifier l'aérogel ou le xérogel, signifie que sa densité "d" est comprise dans les intervalles suivants : [0 ; 0,25] préférentiellement [0,05 ; 0,12].
- *"hydrophobe"* pour qualifier l'aérogel ou le xérogel, signifie que sa reprise de masse (eau) mesurée dans un test consistant à placer une masse d'aérogel ou de xérogel de 0,1g ou 10,0g dans une atmosphère d'air dont l'HR=90% à une température de 25°C, est inférieure ou égale à 10% massique, de préférence à 5% massique.
- *"granulométrie"* correspond au Dmax en tamisage à sec.
- La granulométrie d'une *"poudre"* est inférieure ou égale à 1 mm, de préférence comprise entre 100 µm et 1 mm.
- La granulométrie d'un *"granulat"* est supérieure à 1 mm, de préférence inférieure ou égale à 10 mm.
- *"Filler"* désigne une charge poudreuse légère pour mortier, comprenant par exemple des particules siliceuses, calcaires, silico-calcaires et/ou des particules de perlite ou de vermiculite, de granulométrie inférieure ou égale à 200 µm.
- *"léger"* pour qualifier les produits utilisés dans les enduits, signifie de densité inférieure ou égale à 0,1 Kg/L.

### Description détaillée de l'invention

### L'ENDUIT

De préférence, la poudre ou le granulat est à base et/ou et constitué par au moins un xérogel de silice et hydrophobe obtenu en traitant un organogel de silice avec un agent hydrophobant en présence d'acide et dans un solvant, en séparant l'organogel hydrophobe obtenu et en éliminant le solvant de l'organogel par évaporation.

Selon un mode préféré de réalisation de l'invention, l'enduit se caractérise par le fait que sa matière sèche a la composition suivante, en % massique, dans l'ordre croissant de préférence pour chaque constituant :

| | |
|---|---|
| (a.1) Liant hydraulique minéral..... | [0-99]; [45-99]; [48-85]; [50-80] |
| (a.2) Liant organique..... | [0-99] [1-40]; [1-20]; [2-18]; [5-15] |

*avec la condition selon laquelle au moins l'un des pourcentages massiques (a.1)* & *(a.2) est supérieur à 0;*

| | |
|---|---|
| (b) Charge isolante..... | [0,5-65]; [5-60]; [15-55] |
| (c) Charge structurante..... | [0-60]; [0-50]; [0-40] |
| (d) Adjuvants..... | |
| i. Epaississant..... | [0,05-2,0]; [0,1-1,5]; [0,1-1] |
| ii. Rétenteur d'eau..... | [0,05-2,0]; [0,1-1,0]; [0,15-0,8] |
| iii. Entraîneur d'air..... | [0,01-1,0]; [0,05-0,8]; [0,08-0,4] |
| iv. Retardateur de prise..... | [0-1,0]; [0-0,8]; [0-0,4] |
| v. Accélérateur de prise..... | [0-1,0]; [0-0,8]; [0-0,6] |
| vi. Fibres..... | [0-5,0]; [0,1-3,0]; [0,5-2,0] |

Selon une variante, le % massique de charge isolante (b) est inférieur à 50 %, de préférence compris entre 15 et 49%, et, plus préférentiellement encore, compris entre 15 et 45%.

### Taux de gâchage :

Avantageusement, l'enduit selon l'invention a une teneur en eau, exprimée par un taux de gâchage, c'est-à-dire un rapport de la masse d'eau introduite sur la masse de matière sèche du liant (a) et de la charge (b), en pourcentage, qui est, dans l'ordre croissant de préférence : [10-300]; [50-200]; [60-100].

Selon une variante, le taux de gâchage est compris entre [45-130], de préférence [50-120].

Les bornes ci-dessus sont définies par un maximum correspondant au taux au-delà duquel la pâte de liant hydraté fraîche devient une suspension et pour lequel les grains de liants sédimentent, et par minimum correspondant au taux en-deçà duquel le liant n'est pas suffisamment mouillé pour former une pâte homogène.

### Liant hydraulique minéral (a.1) :

Selon un mode préféré de réalisation de l'invention, le liant hydraulique minéral (a.1) est choisi dans le groupe comprenant: les ciments alumineux (avantageusement les ciments sulfo-alumineux et les ciments à base d'aluminates de calcium), les ciments Portland, les chaux (avantageusement les chaux aériennes et les chaux hydrauliques), les sulfates de calcium (avantageusement l'anhydrite, le gypse et le plâtre) et leurs mélanges ;
les ciments alumineux et les ciments sulfo-alumineux (avantageusement mélangés à du gypse selon un pourcentage massique compris entre 10 et 90 % par rapport au mélange) étant préférés ;
les mélanges ciments sulfo-alumineux/chaux et/ou ciments Portland et les mélanges ciments alumineux à base d'aluminates de calcium/source(s) de sulfate(s)/chaux étant particulièrement préférés.

Le ciment sulfoalumineux ayant un taux de gypsage de 25 % est particulièrement préféré pour la réalisation de la présente invention.

### Liant organique (a.1) :

Le liant organique (a.2) est plutôt choisi parmi les résines acryliques et vinyliques, de préférence les résines styrène-acrylique, acrylique, vinyl-acétate d'éthylène, vinyl-acétate/ versatate/ éthylène, et leurs mélanges.

Le liant (a.1) et/ou (a.2) selon l'invention est peu conducteur et assure une tenue mécanique importante.

### Charge isolante (b) :

De façon remarquable, le pourcentage massique de la charge isolante (b) par rapport à la matière sèche est inférieur ou égal à 60, 50 et 40 dans l'ordre croissant de préférence.

De façon avantageuse, la charge (b) est obtenue par la voie alcoxysilane à partir de tétraalcoxysilane, (de préférence tétraéthoxysilane) en milieu organique, de manière à produire un organogel traité par un agent hydrophobant choisi parmi les polyalkylsiloxanes, l'héxadiméthylsiloxane étant particulièrement préféré.

En outre, selon un mode de réalisation préféré de l'invention, la charge (b) est une poudre ou un granulat de xérogel de silice de granulométrie inférieure ou égale à 2000 µm, de préférence comprise entre 250 et 2000 µm, entre 150 et 500 µm, entre 200 et 250 µm, ou entre 0 et 125µm ; et, plus préférentiellement comprise entre 150 et 500 µm.

Suivant une modalité intéressante de l'invention, le xérogel retenu a subi un traitement de surface limitant la reprise hydrique et lui donnant une certaine hydrophobicité.

De manière plus détaillée, les organogels sont obtenus par des réactions simultanées d'hydrolyse et de condensation d'un précurseur constitué par un pré-hydrolysat sous-stœchiométrique de tétraéthoxysilane en milieu organique :
Réaction d'hydrolyse :

   (RO)₃=Si-OR + H₂O -> (RO)₃=Si-OH + ROH
Réaction de condensation H₂O :

   (RO)₃≡Si-OH + HO-Si≡ (OR)₃ -> (RO)₃≡Si-O- Si= (OR)₃ + H₂O
Réaction de condensation R-OH :

   (RO)₃≡Si-OR + HO-Si≡ (OR)₃ -> (RO)₃≡Si-O- Si= (OR)₃ + ROH

Ces réactions pouvant être catalysées en milieu basique ou en milieu acide.

Les gels ainsi obtenus sont ensuite broyés en grains millimétriques avant d'être traités par de l'hexaméthyldisiloxane, ce qui rend les gels hydrophobes par substitution de silanols de surface hydrophiles par des groupes alkyles ramifiés.

En ce qui concerne le séchage des organogels pour obtenir les xérogels utilisés comme charge de l'enduit de la présente invention, il s'agit d'un séchage évaporatif dont les conditions dépendent de la nature du solvant utilisé. Il peut s'agir notamment d'un séchage sur lit fluidisé ou en étuve industrielle.

Les avantages des charges (b) utilisées dans la présente invention sont nombreux. L'hydrophobicité de surface et la nanostructure particulière de ces charges, le tout allié à une très faible conductivité thermique les rend attractives pour l'isolation des bâtiments. De surcroît, leur forme granulaire se prête idéalement à la préparation d'enduits projetables isolants.

### Charge structurante (c) :

Suivant une modalité privilégiée de l'invention, la charge structurante (c) est choisie parmi les charges minérales, de préférence parmi les sables et/ou les fillers.
Les sables peuvent être par exemple siliceux, calcaires, silico-calcaires.

### Adjuvants (d) :

En ce qui concerne les adjuvants (d), ils ont pour rôle d'offrir une régularité des propriétés du matériau et permettent de remplir le cahier des charges précis propre à chaque enduit.

En particulier, les épaississants (di) permettent de contrôler la porosité du matériau obtenu, notamment dans les produits cimentaires légers, de faciliter l'incorporation de granulats légers et d'améliorer l'homogénéité de leur distribution volumique.

Les rétenteurs d'eau (dᵢᵢ) ont la propriété de conserver l'eau de gâchage avant la prise. L'eau est ainsi maintenue dans la pâte de mortier, ce qui lui confère une bonne adhérence. Dans une certaine mesure, elle est moins absorbée par le support, le relargage en surface est limité et on a ainsi peu d'évaporation.

Les entraîneurs d'air (dᵢᵢᵢ) sont des tensioactifs qui ont pour effet de créer un réseau de bulles d'air qui améliorent la plasticité par réduction des frottements et donnent au mortier un caractère non gélif.

Les retardateurs de prise (dᵢᵥ) et les accélérateurs de prise (dᵥ) les accélérateurs de prise (dᵥ) sont des produits solubles dans l'eau qui modifient les solubilités, les vitesses de dissolution et l'hydratation des divers constituants des liants.

De manière préférée, l'enduit de l'invention présente au moins l'une des caractéristiques suivantes :
- l'épaississant (di) est choisi parmi les polysaccharides modifiés -de préférence parmi les éthers d'amidons modifiés-, les gommes de Welan, les gommes de guar, les gommes de xanthane, les gommes succinoglycanes, les alcools polyvinyliques, les polymères polyacrylamide, les sépiolites, les bentonites, et leurs mélanges ;
- le rétenteur d'eau (dᵢᵢ) est choisi parmi : les éthers de cellulose et leurs mélanges, et de préférence dans le groupe comprenant les méthylcelluloses, les méthylhydroxypropylcelluloses, les méthylhydroxyéthylcelluloses et leurs mélanges, ou parmi les éthers de guar modifiés et leurs mélanges ;
- l'entraîneur d'air (dᵢᵢᵢ) est choisi parmi les tensioactifs et leurs mélanges, de préférence parmi les résines naturelles, les composés sulfatés ou sulfonatés, les détergents synthétiques, les acides gras organiques et leurs mélanges, plus préférentiellement parmi les lignosulfonates, les savons alcalins d'acide(s) gras et leurs mélanges, et, encore plus préférentiellement dans le groupe comprenant les oléfines sulfonates, le dodécyl-sulfate de sodium, le lauryl sulfate de sodium et leurs mélanges;

- le retardateur de prise (dᵢᵥ) est choisi dans le groupe comprenant l'acide tartrique et ses sels, de préférence les sels de sodium ou de potassium, l'acide citrique et ses sels, de préférence les sels de sodium (citrate trisodique) et leurs mélanges ;
- l'accélérateur de prise (dᵥ) est choisi parmi les carbonates, de préférence de lithium ou de sodium et leurs mélanges ;
- les fibres (dᵥᵢ) comprennent des fibres de polyamide, de polyacrylonitrile, de polyacrylate, de cellulose, de polypropylène, de verre, de sisal, de jute, de chanvre ou de leurs mélanges.

Un autre objet de la présente invention est une composition sèche pour la préparation d'un enduit tel que défini ci-dessus, comprenant :
- un ou plusieurs composants formé(s) par tout ou partie des constituants (a), (c) et (di) à (dᵥᵢ) décrits plus bas, et
- la charge (b).

Suivant une possibilité, cette composition sèche est un mélange prêt à l'emploi comprenant :
- soit un monocomposant contenant le liant (a), la charge isolante (b), la charge structurante (c), et tout ou partie des adjuvants (di) à (dᵥᵢ),
- soit un bicomposant contenant, d'une part, le liant (a), la charge structurante (c) et tout ou partie des adjuvants (di) à (dᵥᵢ), et, d'autre part, la charge isolante (b).

### LE PROCEDE

La présente invention vise aussi un procédé de préparation de l'enduit défini précédemment.

Selon une modalité avantageuse, ce procédé peut être un gâchage en discontinu, dans lequel on mélange, dans la cuve d'une machine à projeter, de l'eau à un mélange prêt à l'emploi comprenant le liant (a), éventuellement la charge isolante (b), la charge structurante (c), les adjuvants (di) à (dᵥᵢ). Le temps de mélange est de préférence égal à 1 à 30 min, voire 3 à 10 min. La charge isolante (b) étant ensuite incorporée progressivement dans le mélange si cela n'a pas été fait auparavant.

Ce procédé est facile à mettre en œuvre par les praticiens du bâtiment.

### L'APPLICATION

Un autre objet de l'invention est l'application par projection sur une surface de bâtiment, de préférence un mur et plus particulièrement un mur de type support monomur en briques ou en béton cellulaire, de l'enduit défini précédemment.
Cette application sur mur peut être réalisée aussi bien pour des bâtiments neufs que pour des bâtiments en rénovation.
L'application selon l'invention est aisée.

### LE REVETEMENT

La présente invention vise également un revêtement obtenu par la susdite application et possédant au moins l'une des propriétés suivantes :
◆ conductivité thermique λ inférieure ou égale à 0,08 W m⁻¹K⁻¹ et de préférence inférieure à 0,065 W m⁻¹K⁻¹,
◆ rétention d'eau supérieure ou égale à 80%, de préférence 90%, et
◆ temps de prise entre 5 et 20 heures, de préférence entre 10 et 14 heures, à 5°C et 30°C, après séchage.

### LES SUPPORTS

Un autre objet de l'invention consiste dans les supports revêtus à l'aide de l'enduit selon l'invention pris en tant que tels.

### EXEMPLES

### -1- Matières premières

### (a.1) liant organique minéral :

Liant sulfoalumineux gypsé à 85 % ou à 25 %, de masse volumique 2,65 g/cm3, de surface spécifique Blaine 4000-5000 cm²/g et de D50 = 20+/- 5 µm.

### (b) charge isolante :

Granulats de xérogel de la société PCAS de conductivité thermique 0.018 Wm⁻¹K⁻¹ < λ < 0.025 Wm⁻¹K⁻¹ et de granulométrie telle que Dmax < 2 cm.

### (c) charge structurante

### (d) Adjuvants :

### (di) épaississant :

Ether d'amidon modifié de viscosité Brookfield 800 - 1000 mPa.s en suspension à 1% et à 20°C. Opagel^{®}FP9 de la société AVEBE.

Ether d'amidon modifié viscosité brookfield 15000 mPa.s (broche4/ en suspension à 6,8%/ 20°C avec un taux de particules de taille supérieure à 300 µm < 50mg/g. Solvitose® H2060 de la société AVEBE.

### (dᵢᵢ) rétenteur d'eau :

Méthylcellulose modifiée viscosité brookfield 32000-43000 mPa.s (en suspension à 2 %/ 20°C). Culminal® 8366 de la société AQUALON.

### (diii) entraineur d'air :

Oléfine sulfonate de granulométrie telle que les particules de taille inférieure à 100 µm représentent 15-45 % en poids, les particules de taille comprise entre 100 et 180 µm : représentent 20-40 % en poids, et les particules de taille comprise entre 180 et 315 µm représentent de 20-40 % en poids.

### (dᵢᵥ) retardateur de prise :

Tartrate de Na+ K+ : Potassium-Sodium-2,3-Dihydroxysuccinate Tetrahydrate / 1,77 g/cm3

### (dᵥᵢ) Fibres :

Fibres polyamide 6-6 4 mm/2,6 dtex

### Mode opératoire :

* 2 Kg de poudre comprenant le liant (a), la charge structurante (c), les adjuvants (di) à (dᵥᵢ) sont préparés et mélangés 2 minutes sur mélangeur de laboratoire Guedu (modèle 4.5 NO) de capacité utile 3,5 litres à une vitesse comprise entre 545 et 610 tours/minute.
* Les granulats de xérogel sont pesés à part.
* Les 2Kg de poudre obtenus sont gâchés sur malaxeur de laboratoire Perrier: 30 secondes à une vitesse de 120 tours/minute puis et 1 minute à une vitesse de 60 tours/minute.

### -3- Mesure des propriétés :

* Conductivité thermique λ (W/m.K) : mesure par la méthode du fil chaud sur appareil CT-mètre de la société TELEPH utilisé avec une sonde fil plane de longueur 8 cm placée entre deux éprouvettes prismatiques 14cm x 16cm x 4cm et un temps de chauffe de 180 secondes.
* Résistance en compression Rc en Mpa: mesure sur une demi éprouvette prismatique 4cm x 4cm x 16cm sur presse Perrier avec réglage manuel de la montée en charge suivant NF EN 196-1.
* Résistance en flexion Rf en Mpa: mesure en flexion 3 points sur éprouvettes prismatiques 4cm x 4cm x 16cm sur presse Perrier type 41 suivant NF EN 196-1.
* Densité d du produit durci en Kg/ L mesurée à 28 jours.

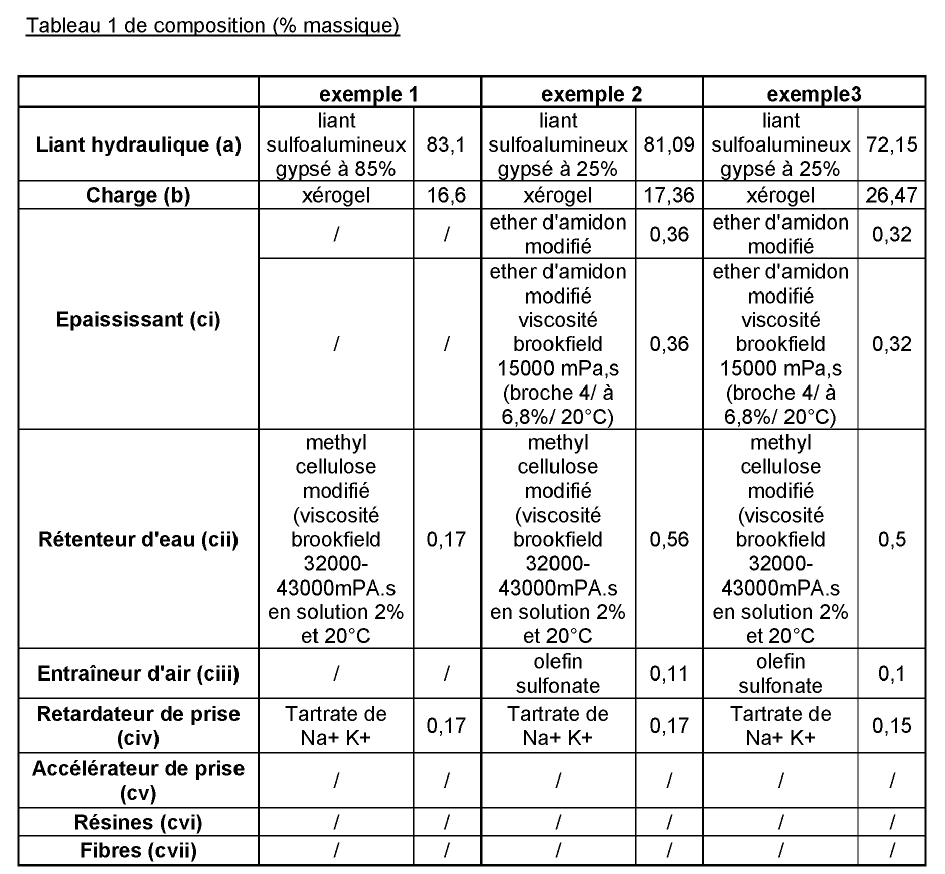

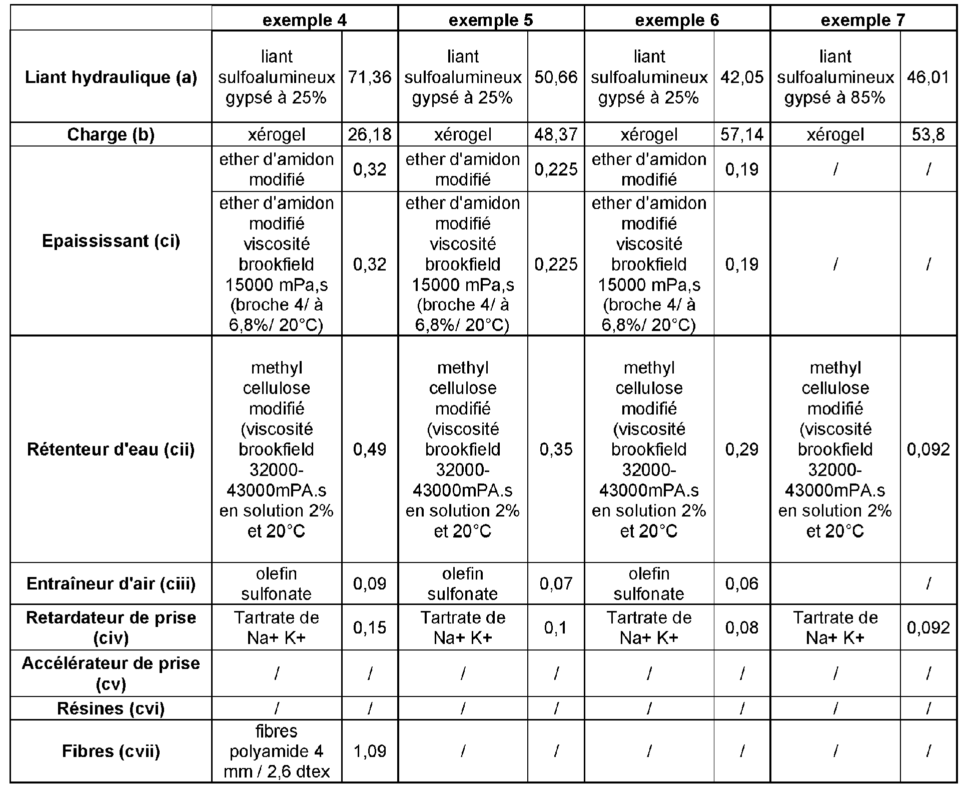

**Tableau 2 récapitulatif des résultats des tests**

| | **exemple 1** | **exemple 2** | **exemple 3** | **exemple 4** | **exemple 5** | **exemple** 6 | **exemple 7** |
|---|---|---|---|---|---|---|---|
| **Taux de gâchage (%)** | 55,3 | 73,7 | 72,1 | 92,07 | 75,8 | 118,6 | 116,2 |
| **λ (W/m,K)** | 0,08 | 0,095 | 0,072 | 0,052 | 0,044 | 0,039 | 0,034 |
| **Rc (Mpa)** | 0,52 | 1,52 | 0,63 | 0,67 | 0,23 | 0,15 | 0,08 |
| **Rf (Mpa)** | 0,17 | 0,54 | 0,1 | 0,4 | 0,11 | 0,04 | 0,01 |
| **d produit durci** | 0,49 | 0,55 | 0,45 | 0,31 | 0,22 | 0,18 | 0,2 |

### Conclusion sur les tests :

Les exemples cités montrent que l'on atteint les objectifs que l'on s'était fixé. Pour comparaison, la conductivité thermique d'un enduit monocouche lourd déterminée au fil chaud se situe entre 0.8 et 1 Watt/m.K et celle d'un enduit monocouche semi allégé autour de 0.55 Watt/m.K.
On trouve sur le marché des enduits allégés aux billes de polystyrène dont la conductivité mesurée par cette même méthode est comprise entre 0.07 et 0.12 Watt/m.K et des enduits allégés à la perlite de conductivité annoncée 0.08 W/m.K.
On peut ici viser des conductivités inférieures en conservant des délais de séchage relativement courts.

## Revendications

1. Enduit applicable sur une surface de bâtiment pour réaliser un revêtement isolant thermiquement, cet enduit comprenant de l'eau, du liant (a), une charge isolante (b) comprenant une poudre ou un granulat d'au moins un aérogel de silice et/ou d'un xérogel de silice hydrophobe, éventuellement une charge structurante (c) et éventuellement des adjuvants (d), **caractérisé en ce que** la matière sèche a la composition suivante, en % massique, dans l'ordre croissant de préférence pour chaque constituant :
| | |
|---|---|
| (a.1) Liant hydraulique minéral..... | [0-99]; [45-99]; [48-85]; [50-80] |
| (a.2) Liant organi que..... | [0-99] [1-40]; [1-20]; [2-18]; [5-15] |
*avec la condition selon laquelle au moins l'un des pourcentages massiques (a.1)* & *(a.2) est supérieur à 0 ;*
| | |
|---|---|
| (b) Charge isolante..... | [0,5-65];[5-60];[15-55] |
| (c) Charge structurante..... | [0-60],[0-50],[0-40] |
| (d) Adjuvants..... | |
| (e) Epaississant..... | [0,05-2,0]; [0,1-1,5]; [0,1-1] |
| i. Rétenteur d'eau..... | [0,05-2,0]; [0,1-1,0]; [0,15-0,8] |
| ii. Entraîneur d'air..... | [0,01-1,0]; [0,05-0,8]; [0,08-0,4] |
| iii. Retardateur de prise..... | [0-1,0]; [0-0,8]; [0-0,4] |
| iv. Accélérateur de prise..... | [0-1,0]; [0-0,8]; [0-0,6] |
| v. Fibres..... | [0-5,0]; [0,1-3,0]; [0,5-2,0]. |

2. Enduit selon la revendication 1, **caractérisé en ce que** la poudre ou le granulat d'au moins un xérogel de silice hydrophobe est obtenu en traitant un organogel de silice avec un agent hydrophobant en présence d'acide et dans un solvant ; en séparant l'organogel hydrophobe obtenu ; et en éliminant le solvant de l'organogel par évaporation.

3. Enduit selon l'une au moins des revendications précédentes, **caractérisé en ce que** sa teneur en eau est exprimée par un taux de gâchage, c'est-à-dire un rapport de la masse d'eau introduite sur la masse de matière sèche du liant (a) et de la charge (b), en pourcentage, qui est, dans l'ordre croissant de préférence : [10-300]; [50-200]; [60-100].

4. Enduit selon la revendication 1 ou 3, **caractérisé en ce que** le liant hydraulique minéral (a.1) est choisi dans le groupe comprenant : les ciments alumineux (avantageusement les ciments sulfo-alumineux et les ciments à base d'aluminates de calcium), les ciments Portland, les chaux (avantageusement les chaux aériennes et les chaux hydrauliques), les sulfates de calcium (avantageusement l'anhydrite, le gypse et le plâtre) et leurs mélanges ; les ciments sulfo-alumineux (avantageusement mélangé à du gypse selon un pourcentage massique compris entre 10 et 90% par rapport au mélange) et les ciments alumineux étant préférés, les mélanges ciments sulfo-alumineux/chaux et/ou ciments Portland et les mélanges ciments alumineux à base d'aluminates de calcium /source(s) de sulfate(s)/chaux étant particulièrement préférés.

5. Enduit selon la revendication 1 ou 3, **caractérisé en ce que** le liant organique (a.2) est choisi parmi les résines acryliques et vinyliques, de préférence les résines styrène-acrylique, acrylique, vinyl-acétate d'éthylène, vinyl-acétate/ versatate/ éthylène, et leurs mélanges.

6. Enduit selon l'une au moins des revendications précédentes, **caractérisé en ce que** le pourcentage massique de la charge isolante (b) par rapport à la matière sèche est inférieur ou égal à 60, 50 et 40 dans l'ordre croissant de préférence.

7. Enduit selon l'une au moins des revendications précédentes, **caractérisé en ce que** la charge (b) est obtenue par la voie alcoxysilane à partir de tétraalcoxysilane, (de préférence tétraéthoxysilane) en milieu organique, de manière à produire un organogel traité par un agent hydrophobant choisi parmi les polyalkylsiloxanes, l'hexadiméthylsiloxane étant particulièrement préféré.

8. Enduit selon l'une au moins des revendications précédentes, **caractérisé en ce que** la charge (b) est une poudre ou un granulat de xérogel de silice de granulométrie inférieure ou égale à 2000 µm, de préférence comprise entre 250 et 2000 µm, entre 150 et 500 µm, entre 200 et 250 µm, ou entre 0 et 125 µm, et, plus préférentiellement comprise entre 150 et 500 µm.

9. Enduit selon l'une au moins des revendicationsprécédentes, présentant au moins l'une des caractéristiques suivantes :
- La charge structurante (c) est choisie parmi les charges minérales, de préférence parmi les sables et/ou les fillers ;
- l'épaississant (di) est choisi parmi les polysaccharides modifiés, de préférence parmi les éthers d'amidons modifiés, les gommes de Welan, les gommes de guar, les gommes de xanthane, les gommes succinoglycane, les alcools polyvinyliques, les polymères polyacrylamide, les sépiolites, les bentonites, et leurs mélanges ;
- le rétenteur d'eau (dᵢᵢ) est choisi parmi : les éthers de cellulose et leurs mélanges, et de préférence dans le groupe comprenant les méthylcelluloses, les méthylhydroxypropylcelluloses, les méthylhydroxyéthyl-celluloses et leurs mélanges, ou parmi les éthers de guar modifiés et leurs mélanges ;
- l'entraîneur d'air (dᵢᵢᵢ) est choisi parmi les tensioactifs et leurs mélanges, de préférence parmi les résines naturelles, les composés sulfatés ou sulfonatés, les détergents synthétiques, les acides gras organiques et leurs mélanges, plus préférentiellement parmi les lignosulfonates, les savons alcalins d'acide(s) gras et leurs mélanges, et, encore plus préférentiellement dans le groupe comprenant les oléfines sulfonates, le dodécyl-sulfate de sodium, le lauryl sulfate de sodium et leurs mélanges ;
- le retardateur de prise (dᵢᵥ) est choisi dans le groupe comprenant l'acide tartrique et ses sels, de préférence les sels de sodium ou de potassium, l'acide citrique et ses sels, de préférence les sels de sodium (citrate trisodique) et leurs mélanges ;
- l'accélérateur de prise (dᵥ) est choisi parmi les carbonates, de préférence de lithium ou de sodium et leurs mélanges ;
- les fibres (dᵥᵢ) comprennent des fibres de polyamide, de polyacrylonitrile, de polyacrylate, de cellulose, de polypropylène, de verre, de sisal, de jute, de chanvre ou de leurs mélanges.

10. Composition sèche pour la préparation de l'enduit selon l'une au moins des revendications précédentes, **caractérisé en ce qu'**elle comprend :
- un ou plusieurs composants formé(s) par tout ou partie des constituants (a), (c) et (di) à (dᵥᵢ), et
- la charge isolante (b).

11. Procédé de préparation de l'enduit selon l'une au moins des revendications 1 à 9, **caractérisé en ce qu'**il consiste essentiellement à mélanger de l'eau à un mélange prêt à l'emploi comprenant le liant (a), éventuellement tout ou partie de la charge isolante (b), la charge structurante (c), les adjuvants (di) à (dᵥᵢ), le temps de mélange étant de préférence égal à 1 à 30 min, voire 3 à 10 min, la totalité ou le reste de la charge isolante (b) étant ensuite incorporée progressivement dans le mélange si cela n'a pas été fait auparavant.

12. Application par projection sur une surface de bâtiment, de préférence un mur et plus particulièrement un mur de type support monomur en briques ou en béton cellulaire, de l'enduit selon l'une au moins des revendications 1 à 9.

13. Revêtement obtenu par l'application selon la revendication 12, **caractérisé en ce qu'**il présente au moins l'une des propriétés suivantes :
◆ conductivité thermique λ inférieure ou égale à 0,08 W m⁻¹K⁻¹ et de préférence inférieure à 0,065 W m⁻¹K⁻¹,
◆ rétention d'eau supérieure ou égale à 80%, de préférence 90%, et
◆ temps de prise entre 5 et 20 heures, de préférence entre 10 et 14 heures, à 5°C et 30°C, après séchage.
